# EUROPÄISCHE PATENTSCHRIFT

(11) **EP 0 846 394 B1**
(45) Veröffentlichungstag und Bekanntmachung des Hinweises auf die Patenterteilung: **26.05.1999**
(21) Anmeldenummer: 96930075.5
(22) Anmeldetag: 22.08.1996
(51) Int. Cl.: H04N 5/775

(54) **SCHALTUNG ZUM DURCHSCHLEIFEN HOCHFREQUENTER SIGNALE**
CIRCUIT FOR CONNECTING THROUGH HIGH-FREQUENCY SIGNALS
CIRCUITERIE PERMETTANT DE BOUCLER DES SIGNAUX HAUTE FREQUENCE

(30) Priorität: 24.08.1995 DE 19531125
(43) Veröffentlichungstag der Anmeldung: 10.06.1998
(73) Patentinhaber: Interessengemeinschaft für Rundfunkschutzrechte GmbH Schutzrechtsverwertung & Co. KG., D-40210 Düsseldorf (DE)
(72) Erfinder: SECKENDORF, Wilfried, D-39446 Löderburg (DE)
(74) Vertreter: Eichstädt, Alfred, Dipl.-Ing.
(86) Internationale Anmeldenummer: EP9603696
(87) Internationale Veröffentlichungsnummer: WO9708894

(56) Entgegenhaltungen:
- ELEKTOR ELECTRONICS, September 1984, CANTERBURY GB, Seiten 952-955, XP002022879 "SCART Adapter"

## Beschreibung

Die Erfindung betrifft eine Schaltung zum Durchschleifen hochfrequenter Signale (HF-Signale) von einem Eingangsanschluß an mindestens einen Ausgangsanschluß eines elektronischen Gerätes.

In Unterhaltungselektronikgeraten, z. B. in Tonrundfunk- und/oder Fernsehempfangsgeräten aber auch in Videorecordern und in Empfangseinrichtungen für Signale verschiedener Quellen, sind vermehrt mindestens ein HF- oder Videoeingangsanschluß und einer oder mehrere HF- oder Videoausgangsanschlüsse vorgesehen, um beliebige Verknüpfungen und HF- oder Videosignal-Durchschleifungen zu ermöglichen. Bei Fernsehempfangsgeräten, die z. B. mit mindestens zwei AV-Anschlußbuchsen, ausgebildet als SCART-Buchsen, DIN-AV-Buchsen, Cinchbuchsen o.ä. ausgerüstet sind, hat sich das Durchschleifen von Videosignalen, z. B. zur Aufnahme an einen angeschlossenen Videorecorder, als sehr zweckmäßig erwiesen. Es ist darüber möglich, von einer Signalquelle empfangene Videosignale nach dem Durchschleifen aufzuzeichnen. Ebenso ist es bekannt, Vorschaltgeräte,z. B. SAT-Receiver mit einem oder mehreren Videoausgangsanschlüssen zu versehen, um hierüber sowohl einen Videorecorder als auch ein Fernsehempfangsgerat mit Videosignalen speisen zu können.

Die Verwendung beispielsweise von zwei EURO-AV-Anschlüssen in einem Fernsehempfangsgerat gestattet z. B. die gleichzeitige Aufzeichnung von Signalen eines angeschlossenen SAT-Receivers auf einen an den Ausgangsanschluß der anderen EURO-AV- Buchse (SCART-Buchse) angeschlossenen Videorecorder oder das Überspielen von einem Videorecorder auf einen anderen, wobei man das wiedergegebene Bild auf dem Bildschirm des Fernsehempfängers während des Überspielens betrachten kann. Die EURO-AV-Anschlüsse und deren Belegung sind im übrigen in den Zeitschriften "radio fensehen elektronik" 1990, Heft 1, S. 16 - 18, und "Funk-Technik" 1983, Heft 5, S. 208 - 212, erläutert.

Bei allen bekannten Lösungen wird ausschließlich ein Überspielverstärker verwendet, welcher verhindern soll, daß die am Ausgang angeschlossene Belastung, z. B. ein Videorecorder, Rückwirkungen auf den Videoeingang ausübt. Dieser Verstärker erfordert eine Betriebsspannungsversorgung aus dem Fernsehgerät bzw. dem Gerät mit einer entsprechenden Anschlußkonfiguration. Das hat den Nachteil, daß sich das Fernsehgerät während der Überspielung mindestens im stand-by-Zustand, bei einigen Geräten sogar im vollen Betriebszustand befinden muß. Aufgrund der niedrigen Impedanz der Videosignale besitzt dieser Verstärker eine relativ hohe Stromaufnahme, welche sich ungünstig, besonders hinsichtlich des stand-by-Betriebes, auswirkt.

Der Erfindung liegt die Aufgabe zugrunde, die bisherigen technischen Mängel zu beseitigen und eine Schaltung vorzustellen, die eine Durchschleifung von HF-Signalen, z. B. Fernsehsignalen, Tonrundfunksignalen, Videosignalen u.a., auch bei völlig ausgeschaltetem Gerät unter Berücksichtigung eines impedanzrichtigen Abschlusses der An-schlüsse gestattet.

Die erfindungsgemäße Lösung dieser Aufgabe ist im Patentanspruch 1 angegeben. Vorteilhafte Ausgestaltungen der Schaltungsanordnung sind in den Unteransprüchen im einzelnen ergänzend angegeben.

Die Erfindung ermöglicht es, auf einfache Weise stets einen impedanzrichtigen Abschluß des an die HF- oder Videosignalverarbeitungsschaltung oder einen Hf- oder Videosignalverstärker verbundenen Eingangsanschlusses des Gerätes sicherzustellen, wenn kein Empfänger an dem Ausgangsanschluß des Gerätes angeschlossen ist. Im anderen Fall, also bei angeschlossenem Gerät, erfolgt ebenfalls automatisch eine neue Anpassung. In jedem Fall verbraucht die Schaltung keinen Strom. Es braucht also auch kein Verstärker zur Impedanzanpassung vorgesehen zu sein. Dies ist besonders vorteilhaft, wenn z. B. an die erste SCART-Buchse eines Fernsehempfangsgerätes ein SAT-Receiver und an die zweite (Ausgangsbuchse) ein Videorecorder angeschlossen ist und Timeraufnahmen getätigt werden sollen.

Die Erfindung ist aber auch auf Geräteausführungen anwendbar, die mehrere HF- bzw. Videoeingangsanschlüsse aufweisen, die dann entsprechend der Lehre der Erfindung zusätzlich zu den jeweiligen Verknüpfungen geschaltet werden können. Ebenso ist die Erfindung auf Tonrundfunkgeräte anwendbar, ferner auf alle HF-Signale, gleich ob diese analog oder digital sind, die durchgeschleift werden sollen.

Ein Ausführungsbeispiel der Erfindung wird nachfolgend anhand des vereinfacht dargestellten Schaltbildes einer erfindungsgemäßen Schaltungsanordnung in einem Fernsehempfangsgerat näher erläutert.

Ein Videoeingang 20 einer ersten SCART-Buchse 1 ist in üblicher Weise mit einem Video-Verstärker 2 eines nicht dargestellten Fernsehgerätes verbunden. Der Videoeingang 20 der SCART-Buchse 1 ist aber auch zum Zwecke des Durchschleifens mit einem Videoausgang 19 einer zweiten SCART-Buchse 3 ohne einen Zwischenverstärker über einen Koppelkondensator 4 verbunden. Eine solche direkte Verbindung ist normalerweise wegen des Auftretens von Anpassungsfehlern nicht möglich. Die nachfolgend näher beschriebene Schaltung erkennt jedoch, ob am Videoausgang 19 der zweiten SCART-Buchse 3 ein Leitungsabschluß-widerstand 9 eines Verbrauchers angeschlossen ist oder nicht, und schaltet bei fehlender Belastung einen Abschlußwiderstand 5 parallel zum Videoeingang 20 der ersten SCART-Buchse 1.

Zu diesem Zweck ist in Serie zum Abschlußwiderstand 5 die Drain-Source-Strecke eines Feldeffekttransistors 6 angeordnet. Sein Gate ist am Videoausgang 19 der zweiten SCART-Buchse 3 angeschlossen.

Dieser ist aber auch über einen im Verhältnis zum Leitungsabschlußwiderstand 9 viel größeren Widerstand 7 mit einer Gleichspannungsquelle 8 verbunden. Die Gleichspannungsquelle 8 liefert eine Spannung der Größe, daß bei fehlendem Leitungsabschlußwiderstand 9 am Ausgang der SCART-Buchse 3 der Feldeffekttransistor 6 voll durchschaltet. Ist eine Belastung angeschlossen, ergibt sich für die Gleichspannung eine so große Spannungsteilung, daß die Schwellenspannung des Feldeffekttransistors 6 mit Sicherheit unterschritten wird und dieser sperrt.

Der Abschlußwiderstand 5 wird somit unwirksam, dessen Funktion übernimmt jetzt der am Ausgang der SCART-Buchse 3 wirkende Leitungsabschlußwiderstand 9 des angeschlossenen Verbrauchers. Dieser Zustand bleibt auch erhalten, wenn die Gleichspannungsquelle 8 keine Spannung liefert, so daß ein impedanzrichtiges Durchschleifen auch bei völlig abgeschaltetem Fernsehgerät möglich ist.

In einer praktisch aufgebauten Schaltung hatten die Bauteile folgende Werte bzw. Bezeichnungen, wobei der Abschlußwiderstand 5 und der Leitungsabschlußwiderstand 9 ungefähr dieselbe Größenordnung aufwiesen:

| | |
|---|---|
| Kondensator 4 | 220 µF |
| FET 6 | SN 7002 |
| Abschlußwiderstand 5 | 70 Ohm |
| Widerstand 7 | 4,7 KOhm |
| Spannung 8 | 5 Volt |

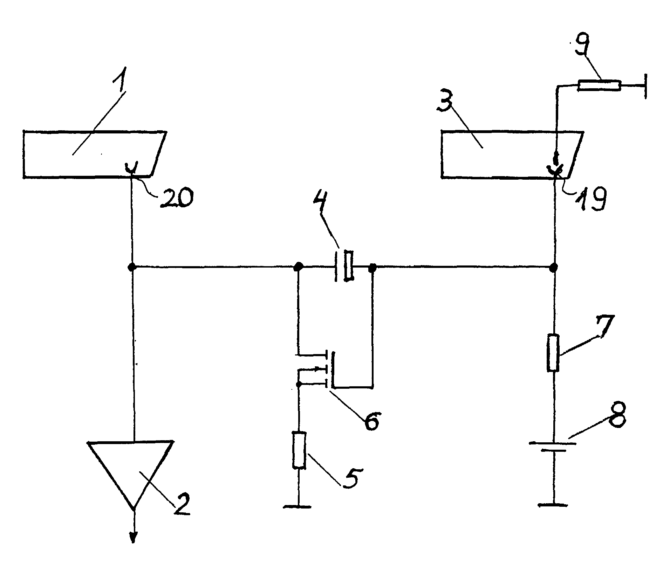

## Patentansprüche

1. Schaltungsanordnung zum Durchschleifen hochfrequenter Signale von einem Eingangsanschluß (20) an mindestens einen daran ankoppelbaren Ausgangsanschluß (19) eines elektronischen Gerätes, wobei der Eingangsanschluß (20) auch mit dem Eingang einer Verstärker- oder Signalverarbeitungsschaltung (2) des Gerätes verbunden ist, aufweisend eine Schaltungsanordnung (4,5,6,7,8), die an eine Gleichspannungsquelle (8) anschließbar ist, zum automatischen Anschalten eines Abschlußwiderstandes (5) parallel zum Eingang der Verstärker- oder Signalverarbeitungsschaltung (2) gegen Masse, wenn am Ausgangsanschluß (19) kein Leitungsabschlußwiderstand (9) angeschlossen ist, und zum Abschalten des Abschlußwiderstandes (5), wenn ein Leitungsabschlußwiderstand (9) am Ausgangsanschluß (19) anliegt, wobei der Abschlußwiderstand (5) auch dann unwirksam geschaltet bleibt, wenn die Gleichspannungsquelle (8) und die übrigen Schaltungen des Gerätes von derartigen Gleichspannungsquellen abgeschaltet sind.

2. Schaltungsanordnung nach Anspruch 1, **dadurch gekennzeichnet**, daß der Eingangsanschluß (20) und der Ausgangsanschluß (19) kapazitiv gekoppelt sind und daß der Abschlußwiderstand (5) vor dem Kondensator (4) an die Verbindungsleitung über die Schaltungsanordnung (4,5,6,7,8) an- und abschaltbar ist.

3. Schaltungsanordnung nach Anspruch 1 oder 2, **dadurch gekennzeichnet,** daß sie einen Stromflußdetektor aufweist, der die Belastung des Ausgangsanschlusses (19) detektiert und daß in Abhängigkeit davon die Schaltungsanordnung zum An- und Abschalten des Abschlußwiderstandes (5) wirksam oder unwirksam geschaltet ist.

4. Schaltungsanordnung nach Anspruch 3, **dadurch gekennzeichnet,** daß die Schaltungsanordnung zum automatischen An- und Abschalten des Abschlußwiderstandes (5) einen elektronischen Halbleiterschalter (6) aufweist, der derart beschaltet ist, daß er beim Anlegen eines Abschlußwiderstandes (9) an den Ausgangsanschluß (19) sperrt und den Abschlußwiderstand (5) unwirksam schaltet.

5. Schaltungsanordnung nach einem der vorhergehenden Ansprüche, **dadurch gekennzeichnet,** daß zwischen dem Eingangsanschluß (20) und Masse eine Serienschaltung, bestehend aus der Drain-Source-Strecke eines Feldeffekttransistors (6) und eines niederohmigen Widerstandes (5), angeordnet ist und
daß der Ausgangsanschluß (19) sowohl mit dem Gate des Feldeffekttransistors (6), als auch über einen hochohmigen Widerstand (7) mit einer Gleichspannungsquelle (8) verbunden ist.

6. Schaltungsanordnung nach Anspruch 5, **dadurch gekennzeichnet,** daß der Abschlußwiderstand (5) vollständig aus der durchgeschalteten Drain-Source-Strecke des Feldeffekttransistors (6) gebildet wird.

7. Schaltungsanordnung nach einem der vorhergehenden Ansprüche, **dadurch gekennzeichnet,** daß das elektronische Gerät ein Gerät der Unterhaltungselektronik ist.

8. Schaltungsanordnung nach einem der vorhergehenden Ansprüche, **dadurch gekennzeichnet,** daß der Eingangsanschluß (20) Bestandteil einer ersten EURO-AV-Anschlußbuchse (SCART-Buchse) (1) und der Ausgangsanschluß (19) Bestandteil einer zweiten EURO-AV-Anschlußbuchse (SCART-Buchse) (3) ist.

9. Schaltungsanordnung nach einem der vorhergehenden Ansprüche, **dadurch gekennzeichnet**, daß das hochfrequente Signal ein Fernsehsignal, oder ein Videosignal und/oder ein Tonrundfunksignal aufweist.

10. Schaltungsanordnung nach einem der vorhergehenden Ansprüche, **dadurch gekennzeichnet,** daß das hochfrequente Signal ein analoges oder digitales Signal aufweist.

## Claims

1. Circuit arrangement for looping-in of high-frequency signals from an input terminal (20) to at least one output terminal (19), which is connected thereto, of electronic apparatus, wherein the input terminal (20) is also connected with the input of an amplifying or signal-processing circuit (2) of the apparatus, comprising a circuit arrangement (4, 5, 6, 7, 8), which is connectible to a direct voltage source (8), for the automatic connecting of a terminal resistance (5), which is parallel to the input of the amplifying or signal-processing circuit (2), relative to ground when no line terminal resistance (9) is connected to the output terminal (19) and for disconnecting the terminal resistance (5) when a line terminal resistance (9) lies at the output terminal (19), wherein the terminal resistance (5) also remains ineffective in connection when the direct voltage source (8) and the remaining circuits of the apparatus are disconnected from direct voltage sources of that kind.

2. Circuit arrangement according to claim 1, characterised in that the input terminal (20) and the output terminal (19) are capacitively coupled and that the terminal resistance (5) in front of the capacitor (4) is connectible to and disconnectible from the connecting line by way of the circuit arrangement (4, 5, 6, 7, 8).

3. Circuit arrangement according to claim 1 or 2, characterised in that it comprises a current flow detector, which detects the loading of the output terminal (19), and that in dependence thereon the circuit arrangement for the connecting and disconnecting of the terminal resistance (5) is switched to be effective or ineffective.

4. Circuit arrangement according to claim 3, characterised in that the circuit arrangement for the automatic connecting and disconnecting of the terminal resistance (5) comprises an electronic semiconductor switch (6), which is so connected that it blocks and switches the terminal resistance (5) to be ineffective when a terminal resistance (9) lies at the output terminal (19).

5. Circuit arrangement according to one of the preceding claims, characterised in that a series circuit consisting of the drain-source path of a field effect transistor (6) and a low-resistance resistor (5) is arranged between the input terminal (20) and ground and that the output terminal (19) is connected both with the gate of the field effect transistor (6) and by way of a highly resistive impedance (7) with a direct voltage source (8).

6. Circuit arrangement according to claim 5, characterised in that the terminal resistance (5) is formed entirely from the through-connected drain-source path of the field effect transistor (6).

7. Circuit arrangement according to one of the preceding claims, characterised in that the electronic apparatus is an apparatus of the entertainment electronic field.

8. Circuit arrangement according to one of the preceding claims, characterised in that the input terminal (20) is a component of a first EURO-AV terminal socket (SCART socket) (1) and the output terminal (19) is a component of a second EURO-AV terminal socket (SCART socket) (3).

9. Circuit arrangement according to one of the preceding claims, characterised in that the high-frequency signal comprises a television signal or a video signal and/or a sound broadcasting signal.

10. Circuit arrangement according to one of the preceding claims, characterised in that the high-frequency signal comprises an analog or a digital signal.

## Revendications

1. Montage pour la circulation en boucle de signaux à haute fréquence depuis une borne d'entrée (20) à au moins une borne de sortie (19), pouvant être couplée à la borne d'entrée, d'un appareil électronique, dans lequel la borne d'entrée (20) est également reliée à une entrée d'un circuit amplificateur ou de traitement de signaux (2) de l'appareil, comportant un montage (4, 5, 6, 7, 8), qui peut être raccordé à une source de tension continue (8), pour le raccordement automatique d'une résistance de terminaison (5) en parallèle avec l'entrée du circuit amplificateur ou de traitement de signaux par rapport à la masse, lorsqu'aucune résistance de terminaison de ligne (9) n'est connectée à la ligne de sortie (19), et pour débrancher la résistance de terminaison (5) lorsqu'une résistance de terminaison de ligne (9) est connectée à la borne de sortie (19), la résistance de terminaison (5) étant branchée à l'état inactif également lorsque la source de tension continue (8) et les autres circuits de l'appareil sont déconnectés de telles sources de tension continue.

2. Montage selon la revendication 1, caractérisé en ce que la borne. d'entrée (20) et la borne de sortie (19) sont couplées de façon capacitive et que la résistance de terminaison (5) peut être connectée à la ligne de jonction en amont du condensateur (4) par l'intermédiaire du montage (4, 5, 6, 7, 8) et en être déconnectée.

3. Montage selon la revendication 1 ou 2, caractérisé en ce qu'il comporte un détecteur de flux de courant qui détecte la charge de sollicitation de la borne de sortie (19) et qu'en fonction de cela, le montage pour le branchement et le débranchement de la résistance de terminaison (5) est activé ou désactivé.

4. Montage selon la revendication 3, caractérisé en ce que le montage pour le branchement et le débranchement automatique de la résistance de terminaison (5) comporte un interrupteur électronique à semiconduceurs (6) qui est câblé de telle sorte qu'il est bloqué lors du raccordement d'une résistance de terminaison (9) à la borne de sortie (19), et place à l'état inactif la résistance de terminaison (5).

5. Montage selon l'une des revendications précédentes, caractérisé en ce qu'entre la borne d'entrée (20) et la masse est branché un circuit série constitué par la voie drain-source d'un transistor à effet de champ (6) et par une résistance faible valeur ohmique (5), et que la borne de sortie (19) est reliée aussi bien à la grille du transistor à effet de champ (6) que, par l'intermédiaire d'une résistance de faible valeur ohmique (7), à une source de tension continue (8).

6. Montage selon la revendication 5, caractérisé en ce que la résistance de terminaison (5) est formée complètement par la voie drain-source rendue passante du transistor à effet de champ (6).

7. Montage selon l'une des revendications précédentes, caractérisé en ce que l'appareil électronique est un appareil de l'électronique du spectacle.

8. Montage selon l'une des revendications précédentes, caractérisé en ce que la borne d'entrée (20) fait partie d'une première douille de raccordement EURO-AV (douille SCART) (1) et que la borne de sortie (19) fait partie d'une douille de raccordement EURO-AV (douille SCART) (3).

9. Montage selon l'une des revendications précédentes, caractérisée en ce que le signal à haute fréquence comporte un signal de télévision, ou un signal vidéo et/ou un signal radio.

10. Montage selon l'une des revendications précédentes, caractérisé en ce que le signal à haute fréquence comporte un signal analogique ou numérique.
